Europäisches Patentamt

European Patent Office

Office européen des brevets

(19)

(11) **EP 1 027 588 B1**

(12) **EUROPÄISCHE PATENTSCHRIFT**

(45) Veröffentlichungstag und Bekanntmachung des Hinweises auf die Patenterteilung:
**27.03.2002 Patentblatt 2002/13**

(21) Anmeldenummer: **98940187.2**

(22) Anmeldetag: **08.07.1998**

(51) Int Cl.⁷: $G01N\ 3/20$, $G01N\ 3/32$

(86) Internationale Anmeldenummer:
**PCT/EP98/04254**

(87) Internationale Veröffentlichungsnummer:
**WO 99/02962 (21.01.1999 Gazette 1999/03)**

(54) **GERÄT ZUM BESTIMMEN VON SPEZIFISCHEN EIGENSCHAFTEN EINES ENDLICHEN RICHTGUTES**

DEVICE FOR DETERMINING THE SPECIFIC CHARACTERISTICS OF A FINAL STRAIGHTENED PRODUCT

APPAREIL POUR DEFINIR DES PROPRIETES SPECIFIQUES D'UN PRODUIT DRESSE FINAL

(84) Benannte Vertragsstaaten:
**AT BE DE FR GB IT**

(30) Priorität: **09.07.1997 DE 19729438**

(43) Veröffentlichungstag der Anmeldung:
**16.08.2000 Patentblatt 2000/33**

(73) Patentinhaber: **WITELS APPARATE-MASCHINEN ALBERT GmbH & Co. KG**
**D-12277 Berlin (DE)**

(72) Erfinder: **PAECH, Marcus**
**D-19322 Wittenberge (DE)**

(74) Vertreter: **Zellentin, Rüdiger, Dr.**
**Zellentin & Partner,**
**Zweibrückenstrasse 15**
**80331 München (DE)**

(56) Entgegenhaltungen:
**EP-A- 0 448 186**      **DE-A- 3 815 423**
**GB-A- 1 202 929**      **US-A- 4 962 669**

- **R. PLIETSCH ET AL.: "Querkraftfreie Biegeprüfung" MATERIALPRUFUNG, Bd. 36, Nr. 3, 1994, Seiten 61-64, XP002086580 in der Anmeldung erwähnt**
- **PATENT ABSTRACTS OF JAPAN vol. 015, no. 131 (P-1186), 29. März 1991 -& JP 03 013844 A (OKI ELECTRIC IND CO LTD), 22. Januar 1991**
- **PATENT ABSTRACTS OF JAPAN vol. 008, no. 137 (P-282), 26. Juni 1984 -& JP 59 038633 A (KOGYO GIJUTSUIN;OTHERS: 0J), 2. März 1984**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft ein Gerät zur diskontinuierlichen Bestimmung des E-Moduls und/oder der Streckgrenze bzw. einer Dehngrenze bei nicht proportionaler Dehnung und/oder des Verfestigungsmoduls und/oder von Parametern der Wechselbeanspruchungen und/oder einer vorgegebenen Biegung eines endlichen Richtgutes, wie Bleche, Bänder, Profile, Rohre und insbesondere von draht- oder mehrdrahtförmiges Richtgut mit zwei Aufnehmern mit je einem Antrieb zur Aufbringung definierter Drehmomente für die Enden des Richtgutes, auf das ein definiertes Biegemoment aufbringbar ist und mit einer Meßvorrichtung zur Ermittlung der Krümmungen des Richtgutes, wobei der eine Aufnehmer ortsfest und der andere in der Einspannebene des Richtgutes waagerecht beweglich ist.

Ein derartiges Gerät ist aus DE-Z: Materialprüfung 36 (1994) 3, S. 61-64 bekannt, es dient zur Bestimmung von nicht näher bezeichneten Elastizitätsparametern. Hierzu soll eine kreisbogenförmige Biegelinie des zu messenden Drahtabschnittes erreicht werden. Hierzu sind zur Messung des Biegemomentes mit einem Sensor elastische Verformungen der Speichen eines Momentsensors erforderlich. Aus der mit dem Drehmoment korrelierenden Speichenverformung folgt eine spezifische Torsionssteifigkeit des Drehmomentsensors, so daß der aus der Schrittinformation des Antriebs gewonnene Dreh- bzw. Biegewinkel nicht mit dem Biegewinkel des Aufnehmers übereinstimmt. Entsprechend führt die Verwendung dieses falschen Biegewinkels, der aus der Motorposition resultiert, zu falschen Vorgaben für den Verstellweg des beweglichen Aufnehmers. Die Folge ist, daß eine kreisbogenförmige Biegelinie des Drahtabschnitts nicht erreicht wird und somit auch keine qualitativ hochwertigen Ergebnisse. Außerdem sind nur gerade und nicht auch gekrümmte Drahtabschnitte zu messen.

Aufgabe der Erfindung ist es, ein Gerät der genannten Art dahingehend zu verbessern, das auch Beanspruchungen in wechselnder Richtung und beliebig oft, auch bei gekrümmten Richtgut, meß- und auswertbar sind.

Diese Aufgabe wird durch ein Gerät mit den Merkmalen des Anspruchs 1 gelöst.

Der Unteranspruch gibt eine vorteilhafte Weiterbildung des Gerätes wieder.

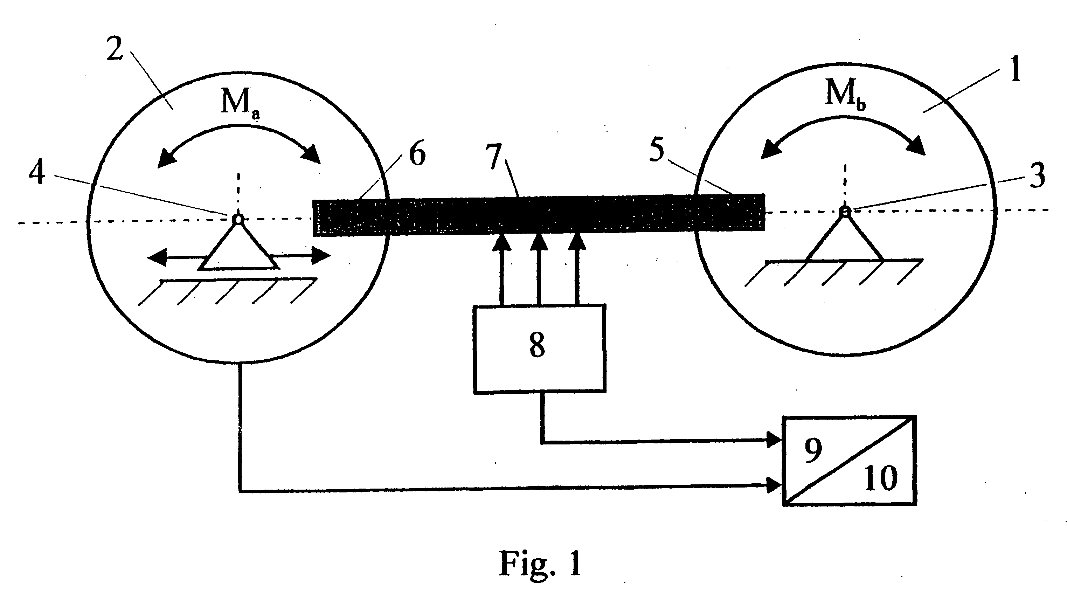

Nachstehend wird die Erfindung anhand eines Ausführungsbeispiels unter Bezug auf eine Zeichnung Fig. 1 und auf Diagramme Fig. 2 bis 6 näher erläutert. Es zeigt:

Fig. 1    ein Ausführungsbeispiel der Erfindung in schematischer Darstellung,

Fig. 2    eine Biegemoment-Krümmungs-Kurve der Erstbeanspruchung,

Fig. 3    eine idealisierte Spannungs-Dehnungs-Kurve,

Fig. 4    eine bezogene Biegemoment-Krümmungs-Kurve der Erstbeanspruchung,

Fig. 5    ein Verformungsverhalten bei Beanspruchung und erster Wechselbeanspruchung in entgegengesetzter Richtung,

Fig. 6    eine Biegemoment-Krümmungs-Kurve der Erstbeanspruchung und der Wechselbeanspruchung.

Das erfindungsgemäße Gerät weist zwei Aufnehmer 1, 2 auf, die jeweils um eine Drehachse 3 bzw. 4 drehbar gelagert sind. Die Drehachse 3 ist ortsfest angeordnet, wohingegen die Drehachse 4 in der Anordnungsebene der Drehachsen 3, 4 horizontal (siehe den Doppelpfeil) verschiebbar ist. Zwischen den Drehachsen 3 und 4 ist ein - nicht dargestellter - Abstandsmesser vorgesehen und mindestens ein Aufnehmer 1, 2 ist mit einem - nicht dargestelltem - Drehwinkelmesser gekoppelt. Jeder Aufnehmer 1, 2 weist einen Halter 5 bzw. 6 auf, die einander zugewandt sind und zur festen Anordnung der Enden eines Richtgutes 7 dienen.

Jeder Aufnehmer 1, 2 ist mit einem nicht dargestellten Antrieb zu seiner Drehung in entgegengesetzte Richtungen (siehe den Doppelpfeil) um die Drehachsen 3, 4 gekoppelt. Hierbei kann der Antrieb beider Aufnehmer 1, 2 durch einen einzigen Reversiermotor erfolgen, wobei auch jedem Aufnehmer 1, 2 je ein Motor zugeordnet sein kann, wobei dann durch entsprechende Kopplungen und/oder Getriebe eine Synchronisation der aufgebrachten Drehmomente und/oder der Drehrichtungen gewährleistet werden kann.

In etwa zentral zwischen den beiden Aufnehmern 1 und 2 ist eine Meßvorrichtung 8 zur Ermittlung der Krümmungen des Richtgutes 7 angeordnet, wobei die jeweilige Krümmung aus den Abständen zwischen Richtgut 7 und Meßvorrichtung 8 errechenbar ist, die an mindestens drei - auch mehr - Punkten gemessen werden.

Alternativ läßt sich die jeweilige Krümmung aus der Korrelation zwischen dem gemessenen Drehwinkel mindestens eines Aufnehmers 1, 2 und dem gemessenen Abstand zwischen den Aufnehmern 1 und 2 ermitteln.

Das Gerät weist vorzugsweise einen Speicher 9 und/oder eine Auswerteeinheit 10 auf, denen nicht nur Daten von der Meßvorrichtung 8 sondern auch von den Antrieben der Aufnehmer 1 und 2 zugeführt werden. Von den Aufnehmern 1, 2 werden die Daten über das jeweils aufgebrachte Biegemoment und/oder die Drehrichtung und/oder den Drehwinkel und/oder gegebenenfalls die Frequenz der Wechselbeanspruchungen erfaßt und den ermittelten Krümmungswerten zugeordnet.

Bei einer Erstbeanspruchung wird das eingespannte Richtgut 7 reinen Biegemomenten Ma und Mb ausgesetzt, wobei M = Ma = Mb ist. Die Drehrichtung der Beanspruchung kann einerseits so sein, daß sich das Richtgut konvex oder andererseits in entgegengesetzter Richtung konkav verformt. Durch die horizontal bewegliche Anordnung der Achse 4 des Aufnehmers 2 wird eine Zugbelastung des Richtgutes 7 ausgeschlossen.

Die Drehmomente um die Achsen 3, 4 können unter Verwendung nicht dargestellter Faktoren, Sensoren und Regelkreise zeitlich synchron nach vorgegebenen Beanspruchungsplänen aufgebracht und gemessen werden, wobei das Richtgut auch wechselnd konkav und konvex verformt werden kann. Hierbei kann sich an eine Erstbeanspruchung, die beispielsweise eine konvexe Verformung des Richtgutes 7 zur Folge hat, eine Verformung in die entgegengesetzte Richtung mit konkavem Ergebnis anschließen. Durch Wechselverformungen können die Werkstoffkennwerte der Erstbeanspruchung, der ersten Wechselbeanspruchung sowie auch folgender weiterer Wechselbeanspruchungen bestimmt werden. Parameter der Erstbeanspruchung sind der Elastizitätsmodul, der Verfestigungsmodul und die Streckgrenze. Bauschingerdehnungen, Bauschingerspannungen und Bauschingermodul sind Parameter der Wechselbeanspruchungen. Zur Bestimmung der Parameter sind Beanspruchungspläne und Auswerteverfahren zu erstellen, wobei gemäß einem Beanspruchungsplan definierte Biegemomente auf das Richtgut 7 aufgebracht und die jeweilige entsprechende Krümmung ermittelt wird. Aus einem konstanten Biegemoment über der wirksamen Länge des Richtgutes 7 resultiert über der wirksamen Länge auch eine konstante Krümmung. Im Ergebnis der Einstellung unterschiedlicher Biegemomente, zunächst beispielsweise in konvexer Richtung und der Ermittlung der entsprechenden Krümmungen des Richtgutes, liegt für den spezifischen Werkstoff des Richtgutes und der für den Querschnitt des Richtgutes gültige Zusammenhang zwischen Biegemoment und Krümmung vor. Bei einer ausreichenden Anzahl von Wertepaaren kann eine Biegemoment-Krümmungs-Kurve für die Beanspruchungsrichtung erstellt werden. Funktionale Zusammenhänge zwischen dem Biegemoment und der Krümmung lassen sich über Regressionsanalysen ermitteln. Durch den Einsatz analytischer und numerischer Rechenverfahren, die in der Auswerteeinheit 10 installiert werden können, sind die genannten Parameter des Werkstoffes des Richtgutes bestimmbar.

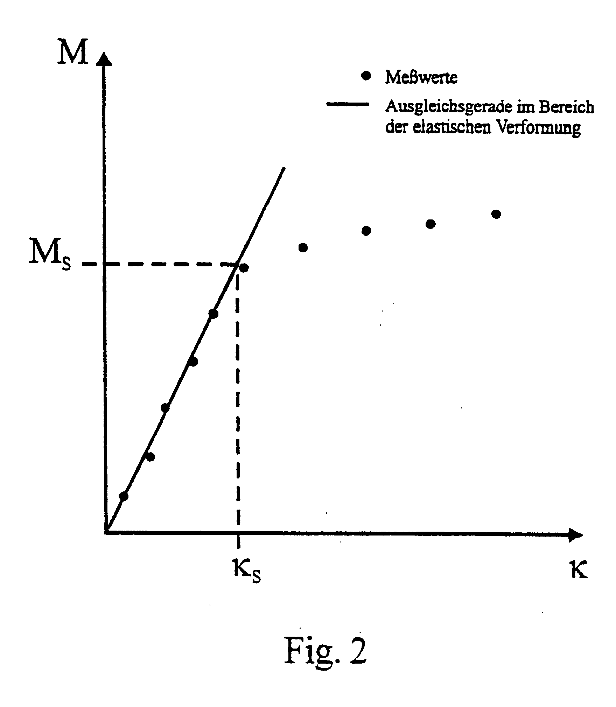

Aus den Informationen der für die Erstbeanspruchung relevanten Biegemoment-Krümmungs-Kurve sind die Streckgrenze, der Elastizitätsmodul und der Verfestigungsmodul berechenbar. Aus einer erstellten Biegemoment-Krümmungs-Kurve, wie sie z. B. in Fig. 2 dargestellt ist, sind die Kennwerte:

$M_S$    Moment bei maximaler elastischer Verformung sowie
$K_s$    Krümmung bei maximal elastischer Verformung

entnehmbar.

Unter Verwendung der Querschnittsabmessungen des Richtgutes ist das jeweilige Widerstandsmoment $W_b$ unter Verwendung der für den Querschnitt gültigen Gleichung zu berechnen. Für den Kreisquerschnitt mit einem Durchmesser d gilt beispielsweise

$$W_b = \frac{\pi \cdot d^3}{32} \qquad\qquad \text{Gleichung 1}$$

Die Streckgrenze $\sigma_s$ des Richtgutes ergibt sich aus der Gleichung 2

$$\sigma_S = \frac{M_S}{W_b} \qquad\qquad \text{Gleichung 2}$$

Unter Verwendung des Wertes der Krümmung bei maximal elastischer Verformung $K_s$, der Streckgrenze $\sigma_s$ gemäß Gleichung 2 sowie der Dicke des Querschnitts (bei einem Kreisquerschnitt wäre dies der Durchmesser d) läßt sich aus der Gleichung 3 der Elastizitätsmodul E berechnen.

$$E = \frac{2 \cdot \sigma_S}{d \cdot \kappa_S} \qquad\qquad \text{Gleichung 3}$$

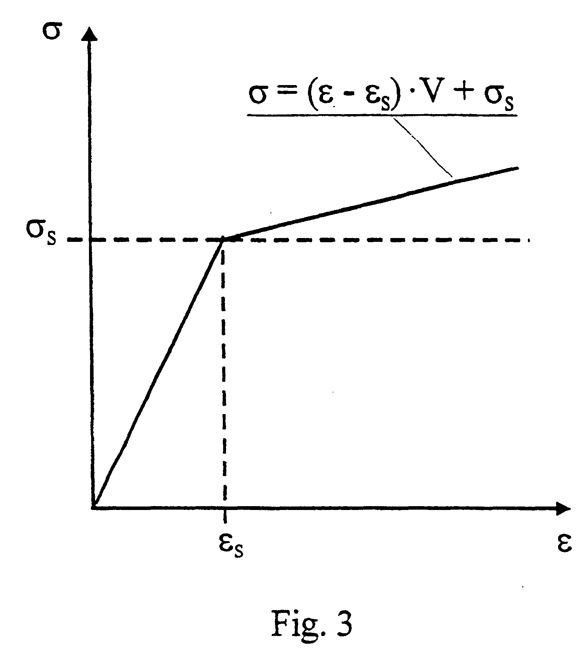

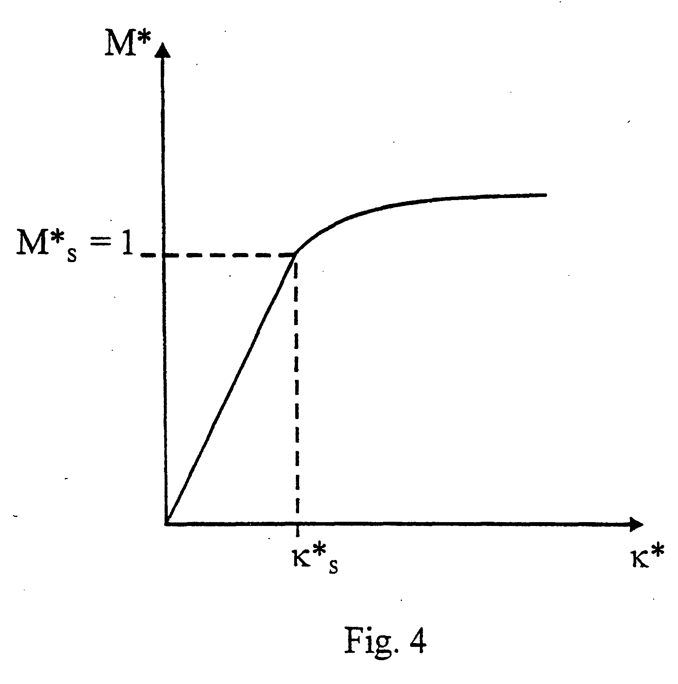

Zur Bestimmung des Verfestigungsmoduls V, der dem Anstieg der Ausgleichsgeraden im plastischen Verformungsbereich der Spannungs-Dehnungskurve entspricht, wie sie beispielhaft in Fig. 3 dargestellt ist, wird eine für die jeweilige Querschnittsform gültige Gleichung, die den Zusammenhang zwischen bezogenem Biegemoment M* und bezogener Krümmung K* für die plastische Verformung ausdrückt, verwendet. Die Biegemoment-Krümmungs-Kurve der Erstbeanspruchung ist mit Ms und Ks in ihre bezogene Darstellung M* = f(K*) zu transformieren (Fig. 4) bzw. es sind die Wertepaare (M*, K*) für den Anteil der plastischen Verformung zu bilden. Wird vorausgesetzt, daß das Richtgut einen kreisförmigen Querschnitt hat, kann mit Gleichung 4 der Verfestigungsmodul V berechnet werden. in die Gleichung geht zusätzlich der Elastizitätsmodul E ein. Bei anderen Querschnittsformen sind die entsprechend gültigen Gleichungen zu verwenden.

$$V = \frac{1}{2} \cdot \frac{4 \cdot \sqrt{\left(\frac{\kappa^{*2}-1}{\kappa^{*2}}\right)} - 10 \cdot \sqrt{\left(\frac{\kappa^{*2}-1}{\kappa^{*2}}\right)} \cdot \kappa^{*2} - 3 \cdot \pi \cdot \kappa^{*3} + 6 \cdot \kappa^{*3} \cdot \arccos\left(\frac{1}{\kappa^*}\right) + 3 \cdot M^* \cdot \pi \cdot \kappa^{*2}}{3 \cdot \kappa^{*3} \cdot \arccos\left(\frac{1}{\kappa^*}\right) - 6 \cdot \sqrt{\left(\frac{\kappa^{*2}-1}{\kappa^{*2}}\right)} \cdot \kappa^* + 11 \cdot \sqrt{\left(\frac{\kappa^{*2}-1}{\kappa^{*2}}\right)} \cdot \kappa^{*2} - 8 \cdot \sqrt{\left(\frac{\kappa^{*2}-1}{\kappa^{*2}}\right)}} \cdot E \quad \text{Gleichung 4}$$

Die Modellierung von Prozessen, die mit elastisch-plastischen Verformungen in wechselnder Richtung verbunden sind, setzt voraus, daß die Stoffgesetze des jeweiligen Werkstoffes des Richtgutes genügend genau bekannt sind. Sowohl die Verfestigungs- als auch die Entfestigungserscheinungen spielen dabei eine Rolle. Ein neues Stoffgesetz bzw. Werkstoffmodell nutzt zur Beschreibung von Entfestigungserscheinungen die Parameter Bauschingerdehnung, Bauschingerspannung und Bauschingermodul. Für die Erstbeanspruchung gelten die Gleichungen 5 und 6.

$$\sigma = E \cdot \varepsilon \qquad \text{für } \varepsilon \leq \varepsilon_S \qquad\qquad \text{Gleichung 5}$$

$$\sigma = \sigma_S + (\varepsilon - \varepsilon_S) \cdot V \qquad \text{für } \varepsilon > \varepsilon_S \qquad\qquad \text{Gleichung 6}$$

Für die auf die Erstbeanspruchung folgende Wechselbeanspruchung in entgegengesetzter Richtung gelten die Gleichungen 7 bis 9. $\sigma_F$ bezeichnet die Fließgrenze der Wechselbeanspruchung, $\varepsilon_F$ die Dehnung an der Fließgrenze, $\varepsilon_{Bau}$ die Bauschingerdehnung, $\sigma_{Bau}$ die Bauschingerspannung und B den Bauschingermodul. Der Bauschingermodul B kennzeichnet den Anstieg der Spannungs-Dehnungs-Kurve im Bereich $\varepsilon_F < \varepsilon \leq \varepsilon_{Bau}$.

$$\sigma = E \cdot \varepsilon \qquad \text{für } \varepsilon \leq \varepsilon_F \qquad\qquad \text{Gleichung 7}$$

$$\sigma = \sigma_F + (\varepsilon - \varepsilon_F) \cdot B \qquad \text{für } \varepsilon_F < \varepsilon \leq \varepsilon_{Bau} \qquad\qquad \text{Gleichung 8}$$

$$\sigma = \sigma_{Bau} + (\varepsilon - \varepsilon_{Bau}) \cdot V \qquad \text{für } \varepsilon > \varepsilon_{Bau} \qquad\qquad \text{Gleichung 9}$$

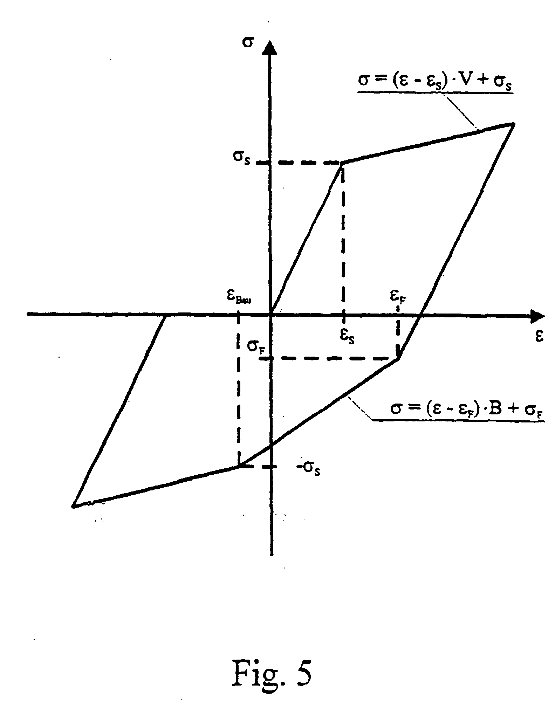

Fig. 5 zeigt eine schematische Darstellung zum berechneten Verformungsverhalten (Gleichungen 5 bis 9) bei wiederholter Belastung bzw. Beanspruchung. Um die Bauschingerdehnung $\varepsilon_{Bau}$ und den Bauschingermodul B für eine der Erstbeanspruchung nachfolgende Beanspruchung berechnen zu können, ist es notwendig, aus der meßtechnisch mit dem Gerät ermittelten Biegemoment-Krümmungs-Kurve der Wechselbeanspruchung die Kennwerte

$K_{Bau}$    Krümmung am Ende des Bauschingerbereichs und
Kf        Krümmung bei maximaler elastischer Beanspruchung

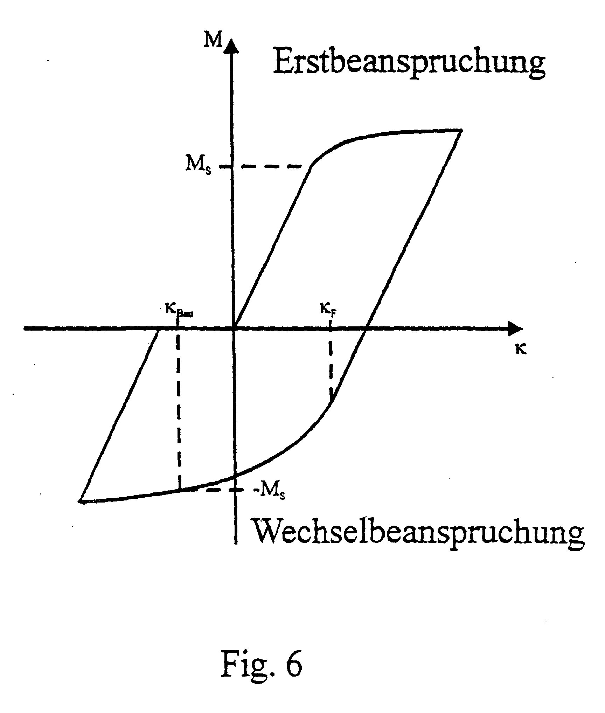

zu bestimmen (Fig. 6).
Die Bauschingerdehnung $\varepsilon_{Bau}$ berechnet sich für Richtgut mit kreisförmigem Querschnitt (Durchmesser d) mit der Krümmung am Ende des Bauschingerbereichs $K_{Bau}$ nach Gleichung 10.

$$\varepsilon_{Bau} = \frac{d \cdot \kappa_{Bau}}{2} \qquad\qquad \text{Gleichung 20}$$

Nach Ermittlung der maximal elastischen Dehnung der Wechselbeanspruchung $\varepsilon_F$ nach Gleichung 11 und der Fließspannung $\sigma_F$ nach Gleichung 12 kann durch Gleichung 13 der Bauschingermodul B berechnet werden.

$$\varepsilon_F = \frac{d \cdot \kappa_F}{2} \qquad \text{Gleichung 11}$$

$$\sigma_F = E \cdot \varepsilon_F \qquad \text{Gleichung 12}$$

$$B = \frac{\sigma_{Bau} - \sigma_F}{\varepsilon_{Bau} - \varepsilon_F} \qquad \text{Gleichung 13}$$

Für die Bauschingerspannung $\sigma_{Bau}$ gilt Gleichung 14, wobei $\sigma_s$ die Streckgrenze der Erstbeanspruchung repräsentiert.

$$\sigma_{Bau} = \sigma_S \qquad \text{Gleichung 14}$$

Die Gleichungen 4 bis 14 sind für den ersten Quadranten eines lokalen Koordinatensystems gültig, das dem ersten Quadranten des in Fig. 5 dargestellten globalen Systems entspricht. Um das Werkstoffverhalten bei Wechselbeanspruchung mit den Gleichungen 5 bis 14 gemäß Fig. 5 zu ermitteln, müssen unter Berücksichtigung von Vorzeichenkonventionen eine Koordinatentransformation und eine Koordinatenrücktransformation durchgeführt werden.

**Patentansprüche**

1. Gerät zur Bestimmung des E-Moduls und/oder der Streckgrenze bzw. einer Dehngrenze bei nicht proportionaler Dehnung und/oder des Verfestigungsmoduls und/oder von Parametern der Wechselbeanspruchungen und/oder einer vorgegebenen Biegung eines endlichen Richtgutes (7), wie Bleche, Bänder, Profile, Rohre und insbesondere von draht- und mehrdrahtförmigem Richtgut, mit zwei Aufnehmern (1, 2) mit je einem Antrieb zur Aufbringung definierter Biegemomente für die Enden des Richtgutes (7), und mit einer Vorrichtung (8) zur Ermittlung der Krümmungen des Richtgutes (7), wobei der eine Aufnehmer (1) ortsfest und der andere (2) in der Einspannebene des Richtguts (7) waagerecht beweglich ist und die Aufnehmer (1, 2) in entgegengesetzte Richtungen derart drehbar gelagert sind, daß das eingespannte Richtgut (7) wechselnd konvex/konkav verformbar ist, **dadurch gekennzeichnet, daß** der andere Aufnehmer (2) frei waagerecht beweglich ist und daß die Vorrichtung (8) einen Drehwinkelmesser für mindestens einen der Aufnehmer (1, 2) und einen Abstandsmesser zur Messung des Abstands zwischen den beiden Aufnehmern (1 und 2) enthält.

2. Gerät nach Anspruch 1, **dadurch gekennzeichnet, daß** das gerät so eingerichtet ist, daß alle Daten der Verformung und der aufgebrachten Momente inklusive deren Richtung einem Speicher (9) und/oder einer Auswerteeinheit (10) zugeführt werden.

**Claims**

1. Device for determining the modulus of elasticity and/or the yield point or an elongation limit in non-proportional extension and/or the reinforcement modulus and/or parameters of the alternating stresses and/or a predetermined bend of a final article to be straightened (7), such as metal sheets, strips, profiles, tubes and in particular wire and multiwire-shaped articles to be straightened, with two receivers (1, 2) each with a drive for applying defined bending moments for the ends of the articles to be straightened (7), and with an appliance (8) for detecting the curvatures of the articles to be straightened (7), the one receiver (1) being stationary and the other (2) being horizontally movable in the clamping plane of the article to be straightened (7) and the receivers (1, 2) being mounted rotatably in opposite directions in such a way that the clamped article to be straightened (7) can alternately be shaped convexly/concavely, **characterised in that** the other receiver (2) is freely movable horizontally and **in that** the appliance (8) contains an angle of rotation measuring device for at least one of the receivers (1, 2) and a distance measuring device for measuring the distance between the two receivers (1 and 2).

2. Device according to claim 1, **characterised in that** the device is set up in such a way that all the data on the shaping and the moments applied, including the direction thereof, are supplied to a memory (9) and/or an evaluation unit (10).

**Revendications**

1. Dispositif destiné à déterminer le module d'élasticité et/ou la limite d'allongement ou la limite d'étirage en cas d'un étirage non proportionnel et/ou du module de consolidation et/ou de paramètres des contraintes alternées et/ou d'un pliage prédéterminé d'un produit dressé final (7), tel que des tôles, des bandes, des profilés, des tubes, et en particulier des produits dressés sous forme de fil et de fils multiples, comportant deux capteurs (1, 2) comportant chacun un entraînement pour l'application de couples de flexion définis pour les extrémités du produit dressé (7), et un dispositif (8) destiné à déterminer les courbures du produit dressé (7), un capteur (1) étant fixé dans sa position et l'autre (2) pouvant être déplacé horizontalement dans le plan de fixation du produit dressé (7), les capteurs (1, 2) étant supportés par rotation dans des directions opposées de sorte que le produit dressé fixé (7) peut être déformé alternativement de manière convexe/concave, **caractérisé en ce que** l'autre capteur (2) peut être déplacé librement dans une direction horizontale et **en ce que** le dispositif (8) comporte un dispositif de mesure de l'angle de rotation pour au moins un des capteurs (1, 2) et un dispositif de mesure de la distance pour mesurer la distance entre les deux capteurs (1 et 2).

2. Dispositif selon la revendication 1, **caractérisé en ce que** le dispositif est agencé de sorte que toutes les données concernant la déformation et les couples appliqués, y compris leur direction, sont amenées vers une mémoire (9) et/ou une unité d'exploitation (10).

Fig. 1

Fig. 2

$$\sigma = (\varepsilon - \varepsilon_S) \cdot V + \sigma_S$$

Fig. 3

Fig. 4

Fig. 5

Fig. 6